(19) Europäisches Patentamt
European Patent Office
Office européen des brevets

(11) **EP 2 843 867 A1**

(12) **EUROPEAN PATENT APPLICATION**
published in accordance with Art. 153(4) EPC

(43) Date of publication:
**04.03.2015 Bulletin 2015/10**

(51) Int Cl.:
**H04L 1/16** (2006.01)

(21) Application number: **13781869.6**

(22) Date of filing: **18.03.2013**

(86) International application number:
**PCT/CN2013/072829**

(87) International publication number:
**WO 2013/159613 (31.10.2013 Gazette 2013/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.04.2012 CN 201210125456**

(71) Applicant: **China Academy of
Telecommunications Technology
Haidian District
Beijing 100191 (CN)**

(72) Inventors:
• LIN, Yanan
  **Beijing 100191 (CN)**
• ZHAO, Rui
  **Beijing 100191 (CN)**
• CHEN, Wenhong
  **Beijing 100191 (CN)**

(74) Representative: **Körfer, Thomas
Mitscherlich PartmbB
Patent- und Rechtsanwälte
Sonnenstrasse 33
80331 München (DE)**

(54) **METHOD AND DEVICE FOR DETERMINING UPLINK CONTROL CHANNEL**

(57) The present invention relates to the communication technology and provides a method and device for determining uplink control channel, which includes the following steps: determining an offset parameter according to the received ePDCCH or the predefined setting, and determining a physical PUCCH for transmitting a feedback information corresponded to said ePDCCH by said offset parameter, and thus realizing the determination for the PUCCH for transmitting ACK/NACK feedback information corresponded to the enhance PDCCH.

```
┌─────────────────────────────────────────────────────┐
│                                                     │  S301
│              Receive an ePDCCH                      │
│                                                     │
└─────────────────────────────────────────────────────┘
                          │
                          ▼
┌─────────────────────────────────────────────────────┐
│  Determine an offset parameter and determine by the  │  S302
│  offset parameter a PUCCH over which feedback        │
│  information corresponding to the ePDCCH is          │
│  transmitted                                         │
└─────────────────────────────────────────────────────┘
```

Fig.3

EP 2 843 867 A1

Printed by Jouve, 75001 PARIS (FR)

## Description

The present application is a US National Stage of International Application No. PCT/CN2013/072829, filed March 18,2013, designating the United States, and claiming priority to Chinese Patent Application No. 201210125456.1, filed with the State Intellectual Property Office of China on April 25, 2012 and entitled "Method and device for determining uplink control channel", which is hereby incorporated by reference in its entirety.

## Field of the Invention

The present invention relates to the field of communications and particularly to a method and a device for determining an uplink control channel.

## Background of the Invention

Along with continuous evolvement of the Long Term Evolution (LTE)-Advanced (LTE-A) standard, Coordinated Multiple-Point (CoMP) transmission, enhanced Multi-User-Multiple Input Multiple Output (MIMO) and other application scenarios have emerged so that the number of user equipments to be served in a cell increases significantly and the demand for the capacity of downlink control channels grows greatly, so it is desirable to investigate relevant solutions to enhanced Physical Downlink Control Channels (PDCCHs).

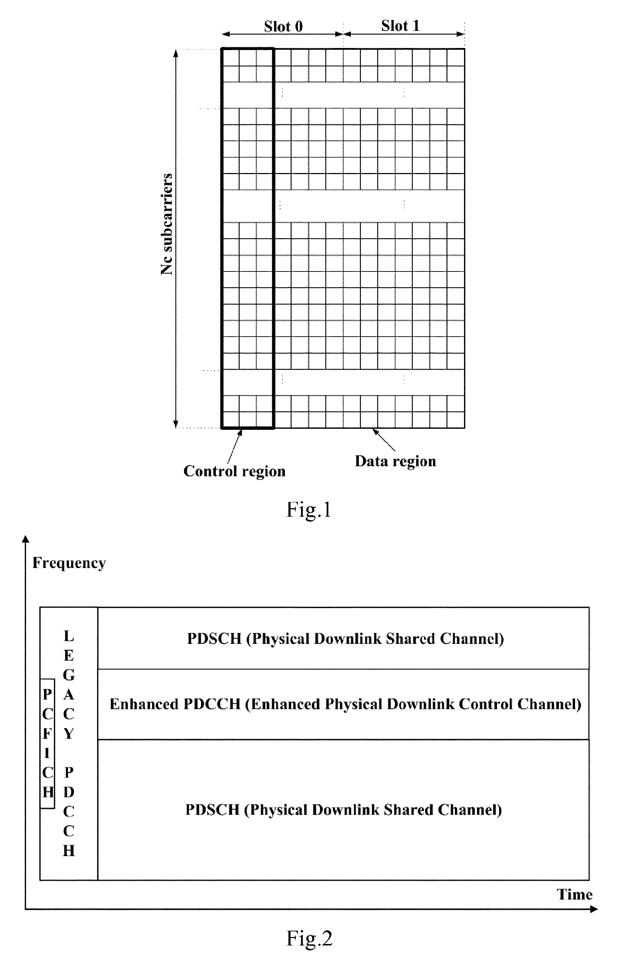

In the LTE system, PDCCHs are transmitted in each radio sub-frame and have a Time Division Multiplexing (TDM) relationship with Physical Downlink Shared Channels (PDSCHs) of downlink data, as illustrated in Fig.1. The PDCCHs are transmitted in first N Orthogonal Frequency Division Multiplex (OFDM) symbols of a downlink sub-frame, wherein N may take the values of 1, 2, 3 and 4, and N=4 is only allowed to occur in a system at a system bandwidth of 1.4MHz.

Transmission solutions to CoMP and enhanced MU-MIMO are being investigated in the course of continuous evolvement of the LTE-A system, wherein a possible scenario of CoMP relates to a macro base station logically constituting together with a plurality of distributed Remote Radio Heads (RRHs) a cell, which makes both the coverage area of and the number of user equipments accessing the cell significantly larger than those in the original LTE system. In the meanwhile, enhanced MU-MIMO is widely applied so that there are a significantly higher number of user equipments served in the cell. There is a consequentially higher demand for the capacity of PDCCHs, but the existing design of LTE PDCCHs fails to accommodate such a demand.

In order to address the problem of limited PDCCH resources and an insufficient capacity above, a solution is to transmit Enhanced PDCCHs (ePDCCHs) in a PDSCH region in a downlink sub-frame, as illustrated in Fig.2, wherein traditional PDCCHs are referred to legacy PDCCHs.

A resource component of an ePDCCH is consisted of a plurality of Resource Elements (REs), and each ePDCCH is transmitted in at least one enhanced Control Channel Element (eCCE); and a cluster of ePDCCH resources refers to at least one consecutive Physical Resource Block (PRB) pair, wherein there are a plurality of eCCEs in a cluster of resources, and a plurality of ePDCCHs may be transmitted in a cluster of resources.

In the discussion of e-PDCCHs in the LTE Release 11 (Rel-11), two supported schemes of localized transmission and distributed transmission in frequency domain, supported by e-PDCCHs and applicable to different scenarios, are determined. Typically the localized transmission scheme is generally applicable to such a scenario that a base station may obtain precise channel information fed back by a user equipment and interference from an adjacent cell will not sharply vary from one sub-frame to another, wherein according to Channel State Information (CSI) fed back by the user equipment, the base station selects consecutive frequency resources with a good quality to transmit e-PDCCHs for the user equipment and performs a pre-coding/beam-forming process to improve the performance of transmission. If no channel information may be obtained accurately or interference from an adjacent cell sharply varies from one sub-frame to another and is unpredictable, then e-PDCCHs need to be transmitted in the distributed transmission scheme, that is, they are transmitted over frequency resources inconsecutive in frequency for a gain of frequency diversity.

In the LTE system, when a PDSCH with PDCCH scheduling, or Acknowledgment/Non-Acknowledgement (ACK/NACK) corresponding to a PDCCH indicating Semi-Persistent Scheduling (SPS) resource releasing is transmitted in a PUCCH format 1a/1b, the serial number $n_{\text{PUCCH}}^{(1,\tilde{P})}$ of a corresponding Uplink Control Channel (PUCCH) thereof in use is typically determined by the serial number of a resource CCE occupied by a downlink control channel PDCCH. Such a design may lower efficiently the number of PUCCH resources reserved in the system, that is, as long as the highest number of reserved dynamic PUCCH resources is equal to the highest number of downlink PDCCHs, instead of being reserved for the highest number of user equipments in the cell, wherein the highest number of PDCCHs is far below the number of user equipments in the cell.

There has been absent so far of a solution for mapping a PUCCH over which ACK/NACK feedback information corresponding to an enhanced PDCCH is transmitted.

## Summary of the Invention

Embodiments of the invention provide a method and a device for determining an uplink control channel so as to determine a PUCCH over which ACK/NACK feedback information corresponding to an enhanced PDCCH is transmitted.

A method for determining an uplink control channel includes:

receiving an enhanced Physical Downlink Control Channel (ePDCCH); and

determining an offset parameter and determining by the offset parameter a Physical Uplink Control Channel (PUCCH) over which feedback information corresponding to the ePDCCH is transmitted.

A device for determining an uplink control channel includes:

a reception component configured to receive an enhanced Physical Downlink Control Channel (ePDCCH); and

a determination component configured to determine an offset parameter and to determine by the offset parameter a Physical Uplink Control Channel (PUCCH) over which feedback information corresponding to the ePDCCH is transmitted.

A method for determining an uplink control channel includes:

transmitting an enhanced Physical Uplink Control Channel (ePUCCH);

determining an offset parameter and determining by the offset parameter a Physical Uplink Control Channel (PUCCH) over which feedback information corresponding to the ePDCCH is transmitted; and

receiving feedback information transmitted by a user equipment over the PUCCH.

A device for determining an uplink control channel includes:

a channel transmission component configured to transmit an enhanced Physical Downlink Control Channel (ePDCCH);
a channel determination component configured to determine an offset parameter and to determine by the offset parameter a Physical Uplink Control Channel (PUCCH) over which feedback information corresponding to the ePDCCH is transmitted; and
an information reception component configured to receive feedback information transmitted by a user equipment over the PUCCH.

The embodiments of the present invention provide a method and a device for determining an uplink control channel, wherein an offset parameter is determined from a received ePDCCH or is preset, and a physical PDCCH over which feedback information corresponding to the ePDCCH is transmitted is determined by the offset parameter, thereby determining a PUCCH over which ACK/NACK feedback information corresponding to an enhanced PDCCH is transmitted.

**Brief Description of the Drawings**

Fig.1 is a schematic diagram of a multiplexing relationship between a control region and a data region in a downlink sub-frame in the prior art;
Fig.2 is a schematic structural diagram of enhanced PDCCHs in the prior art;
Fig.3 is a flow chart of a method for determining an uplink control channel according to an embodiment of the present invention;
Fig.4 is a schematic diagram of ePDCCH transmission according to an embodiment of the present invention;
Fig.5 is a schematic structural diagram of a device for determining an uplink control channel according to an embodiment of the present invention;
Fig.6 is another flow chart of a method for determining an uplink control channel according to an embodiment of the present invention; and
Fig.7 is another schematic structural diagram of a device for determining an uplink control channel according to an embodiment of the present invention.

**Detailed Description of the Embodiments**

The embodiments of the present invention provide a method and a device for determining an uplink control channel, wherein an offset parameter is determined from a received ePDCCH or is preset, and a physical PDCCH over which feedback information corresponding to the ePDCCH is transmitted is determined by the offset parameter, thereby determining a PUCCH over which ACK/NACK feedback information corresponding to an enhanced PDCCH is transmitted.

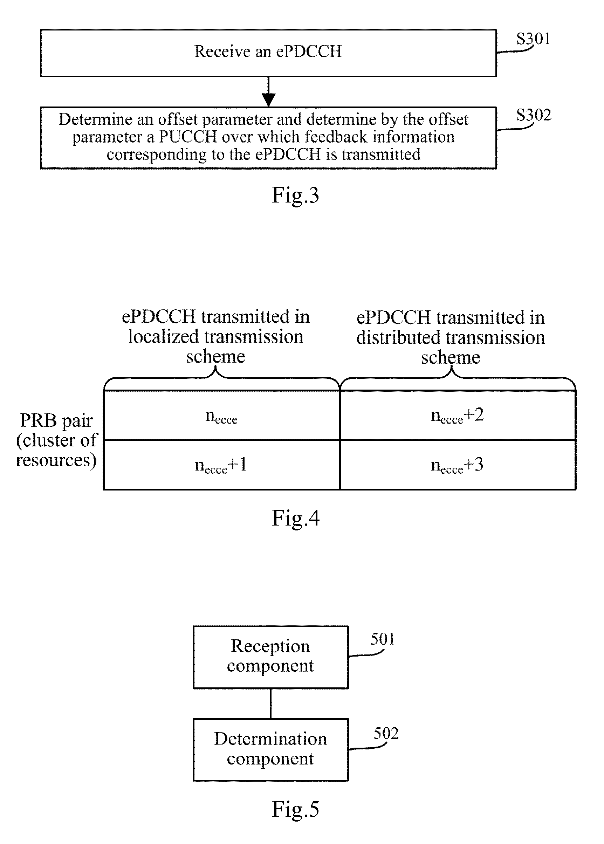

As illustrated in Fig.3, a method for determining an uplink control channel according to an embodiment of the present invention includes the following operations.

Operation S301: receive an ePDCCH.
Operation S302: determine an offset parameter and determine by the offset parameter a PUCCH over which feedback information corresponding to the ePDCCH is transmitted.

The offset parameter may be determined in one or combination of the following schemes.
The offset parameter is determined according to an antenna port via which the ePDCCH is transmitted, and a mapping relationship between antenna ports and offset parameters.

The offset parameter is determined according to a scrambling identity on a reference symbol over which the ePDCCH is transmitted.

The offset parameter is determined from a received higher-layer signaling configuration.

The offset parameter is determined from configuration information in received downlink control signaling.

The offset parameter is determined according to a resource element occupied by the ePDCCH.

The respective schemes to determine the offset parameter will be described below in details.

When the offset parameter is determined in a preset mapping relationship between antenna ports and offset parameters, the mapping relationship between antenna ports via which the ePDCCH is transmitted and offset parameters may be predetermined, wherein the mapping relationship may be configured by a base station through higher-layer signaling or prescribed directly in the system. For example, an offset parameter Offset=0 corresponding to an antenna port 7, an offset parameter Offset=1 corresponding to an antenna port 8, an offset parameter Offset=2 corresponding to an antenna port 9, and an offset parameter Offset=3 corresponding to an antenna port 10 may be set. This scheme is applicable to an ePDCCH transmitted in the localized transmission scheme.

When the offset parameter is determined according to a scrambling identity on a reference symbol over which the ePDCCH is transmitted, a mapping relationship between scrambling identities on reference symbols over which the ePDCCH is transmitted and offset parameters may be predetermined, wherein the mapping relationship may be configured by the base station in higher-layer signaling or prescribed directly in the system. For example, offset=0 corresponding to a scrambling identity S0 and offset=1 corresponding to a scrambling identity S1 are applicable.

Of course, the offset parameter may be determined in combination of determining the offset parameter in a preset mapping relationship between antenna ports and offset parameters and determining the offset parameter according to a scrambling identity on a reference symbol over which the ePDCCH is transmitted, that is, the offset parameter may be determined in a preset mapping relationship between antenna ports, scrambling identities on reference symbols over which the ePDCCH is transmitted, and offset parameters, wherein the mapping relationship may be configured by the base station in higher-layer signaling or prescribed directly in the system. For example, offset=0 corresponding to an antenna port 7 and a scrambling identity S0, offset=1 corresponding to the antenna port 7 and a scrambling identity S1, offset=2 corresponding to an antenna port 8 and the scrambling identity S0, and offset=3 corresponding to the antenna port 8 and the scrambling identity S1 are applicable.

When the offset parameter is determined from configuration information in received higher-layer signaling, a user equipment determines the offset parameter from high-layer signaling issued by the base station, wherein typically when the offset parameter is determined in this scheme, the same offset parameter is determined for respective downlink sub-frames. This scheme is applicable to an ePDCCH transmitted in the distributed transmission scheme.

When the offset parameter is determined from configuration information in received downlink control signaling, the user equipment determines the offset parameter directly from configuration information in downlink control signaling issued by the base station, wherein typically when the offset parameter is determined in this scheme, the offset parameter is used only in the current sub-frame in which the downlink control signaling is received. If the user equipment determines the offset parameter in other schemes and receives the downlink control signaling in the current sub-frame, then the offset parameter determined from the configuration information in the downlink control signaling may be used in the current sub-frame instead of the offset parameter determined in other schemes.

When the offset parameter is determined according to a resource element occupied by the ePDCCH, the offset parameter may be determined in a mapping relationship between serial numbers of resource elements occupied by the ePDCCH and offset parameters, and if there are a plurality of resource elements occupied by the ePDCCH, then the offset parameter may be determined in a mapping relationship between one of the plurality of resource elements and the offset parameter. The mapping relationship between resource elements and offset parameters may be as follows:

The offset parameter is the serial number of a corresponding resource element, that is, $offset = n_{ecce}$, wherein $n_{ecce}$ represents the serial number of a resource element, and at this time the offset parameter is determined by determining the offset parameter as the serial number of prescribed one of the resource elements occupied by the ePDCCH; or

The offset parameter is a parameter mapped to a resource element, and at this time the offset parameter is determined by determining the offset parameter as a parameter mapped to prescribed one of the resource elements occupied by the ePDCCH. In particular:

A parameter mapped to a resource element with the lowest serial number in a cluster of ePDCCH resources is determined as 0, and parameters mapped to the other resource elements among the resource elements occupied by the ePDCCH increase with increasing serial numbers of the resource elements, and as illustrated in Fig.4, there are 4 resource elements in a PRB pair, wherein $offset=0$ for the resource element $n_{ecce}$; $offset = 1$ for the resource element $n_{ecce}+1$; $Offset=2$ for the resource element $n_{ecce}+2$; and $offset = 3$ for the resource element $n_{ecce}+3$; or

A parameter mapped to a resource element with the lowest serial number among resource elements, in which an ePDCCH transmission scheme is supported, in a cluster of ePDCCH resources is determined as 0, and parameters mapped to the other resource elements in which the same ePDCCH transmission scheme is supported increase with increasing serial numbers of the resource elements, and as illustrated in Fig.4, there are 4 resource elements in a PRB pair, wherein an ePDCCH for the localized transmission may be transmitted in the resource elements numbered $n_{ecce}$ and $n_{ecce}+1$, and an ePDCCH for the distributed transmission may be transmitted in the resource elements numbered $n_{ecce}+2$ and $n_{ecce}+3$, so offset=0 for the resource element $n_{ecce}$; offset = 1 for the resource element $n_{ecce}+1$; offset = 0 for the resource element $n_{ecce}+2$ which is the lowest serial number of resource element transmitted in the distributed transmission scheme; and offset = 1 for the resource element $n_{ecce}+3$.

In the operation S302, after the offset parameter is determined, the PUCCH over which feedback information corresponding to the ePDCCH is transmitted is determined by the offset parameter, and the PUCCH over which feedback information corresponding to the ePDCCH is transmitted may be determined in the embodiment of the present invention as follows:

The serial number of the PUCCH over which feedback information corresponding to the ePDCCH is transmitted is determined as $n_{PUCCH}=f(n_{ePDCCH}, offset)$ and preferably $n_{PUCCH}=f_1(n_{ePDCCH})+offset$, wherein $n_{ePDCCH}$ represents the serial number of a physical resource occupied by the ePDCCH. When there are a plurality of physical resources occupied by the ePDCCH, $n_{ePDCCH}$ represents the serial number corresponding to predefined one of the plurality of physical resources, e.g., the serial number corresponding to the first physical resource, wherein $n_{PUCCH}=f_1(n_{ePCCDH})+offset$ may be $n_{PUCCH}=n_{ePDCCH}+offset$; or

The serial number of the PUCCH over which feedback information corresponding to the ePDCCH is transmitted is determined as $n_{PUCCH}=f(n_{PDCCH,eNB}, offset)$ and preferably $n_{PUCCH}=n_{PDCCH,eNB}+offset$, wherein $n_{PDCCH,eNB}$ represents an initial PUCCH resource configured by the base station.

When the initial PUCCH resource is configured by the base station, the base station may configure at least one initial PUCCH resource in higher-layer signaling for each UE. When the base station configure a plurality of initial PUCCH resources for the UE, the UE may determine one of the plurality of initial PUCCH resources as $n_{PDCCH,eNB}$ as indicated by the downlink control signaling of the base station; or the UE may determine one of the plurality of initial PUCCH resources as $n_{PDCCH,eNB}$ in a predefined way, for example, the UE may determine the initial PUCCH resource in a mapping relationship between antenna ports via which the ePDCCH is transmitted and initial PUCCH resources.

When the initial PUCCH resource is configured, the base station may further configure at least one initial PUCCH resource in each cluster of ePDCCH resources available to each UE, and at this time the UE determines the initial PUCCH resource corresponding to the cluster of resources occupied by the ePDCCH as $n_{PDCCH,eNB}$. If each cluster of resources is configured with a plurality of initial PUCCH resources, then the UE may determine one of the plurality of initial PUCCH resources as $n_{PDCCH,eNB}$ as indicated by the downlink control signaling of the base station; or the UE may determine one of the plurality of initial PUCCH resources as $n_{PDCCH,eNB}$ in a predefined way, for example, the UE may determine the initial PUCCH resource in a mapping relationship between antenna ports via which the ePDCCH is transmitted over the cluster of resources and initial PUCCH resources.

An embodiment of the present invention further correspondingly provides an device for determining an uplink control channel, as illustrated in Fig.5, which includes:

A reception component 501 is configured to receive an enhanced Physical Downlink Control Channel (ePDCCH); and

A determination component 502 is configured to determine an offset parameter and to determine by the offset parameter a Physical Uplink Control Channel (PUCCH) over which feedback information corresponding to the ePDCCH is transmitted.

The determination component 502 configured to determine the offset parameter is particularly configured to:

Determine the offset parameter in one or combination of the following schemes:
Determine the offset parameter according to an antenna port, via which the ePDCCH is transmitted, in a mapping relationship between antenna ports and offset parameters, wherein the mapping relationship between antenna ports and offset parameters is configured by higher-layer signaling or prescribed;
Determine the offset parameter according to a scrambling identity on a reference symbol in which the ePDCCH is transmitted;
Determine the offset parameter from configuration information in received higher-layer signaling;
Determine the offset parameter from configuration information in received downlink control signaling; and
Determine the offset parameter according to a resource element occupied by the ePDCCH.

When the determination component 502 determines the offset parameter from configuration information in received higher-layer signaling, the same offset parameter is determined in respective downlink subframes.

When the determination component 502 determines the offset parameter from configuration information in received downlink control signaling, the offset parameter is used only in the current sub-frame in which the downlink control signaling is received.

The determination component 502 configured to determine the offset parameter according to a resource element occupied by the ePDCCH is particularly configured to:

Determine the offset parameter as the serial number of prescribed one of resource elements occupied by the ePDCCH; or
Determine the offset parameter as a parameter mapped to prescribed one of resource elements occupied by the ePDCCH.

The parameter mapped by the resource element is particularly as follows:

A parameter mapped to a resource element with the lowest serial number in a cluster of ePDCCH resources is 0, and parameters mapped to the other resource elements increase with increasing serial numbers of the resource elements; or
A parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

The determination component 502 configured to determine by the offset parameter the PUCCH over which feedback information corresponding to the ePDCCH is transmitted is particularly configured to:

Determine the serial number of the PUCCH over which feedback information corresponding to the ePDCCH is transmitted as the sum of the serial number of preset one of resource elements occupied by the ePDCCH and the offset parameter; and
Determine the serial number of the PUCCH over which feedback information corresponding to the ePDCCH is transmitted as the sum of a preset serial number of an initial PUCCH resource and the offset parameter.

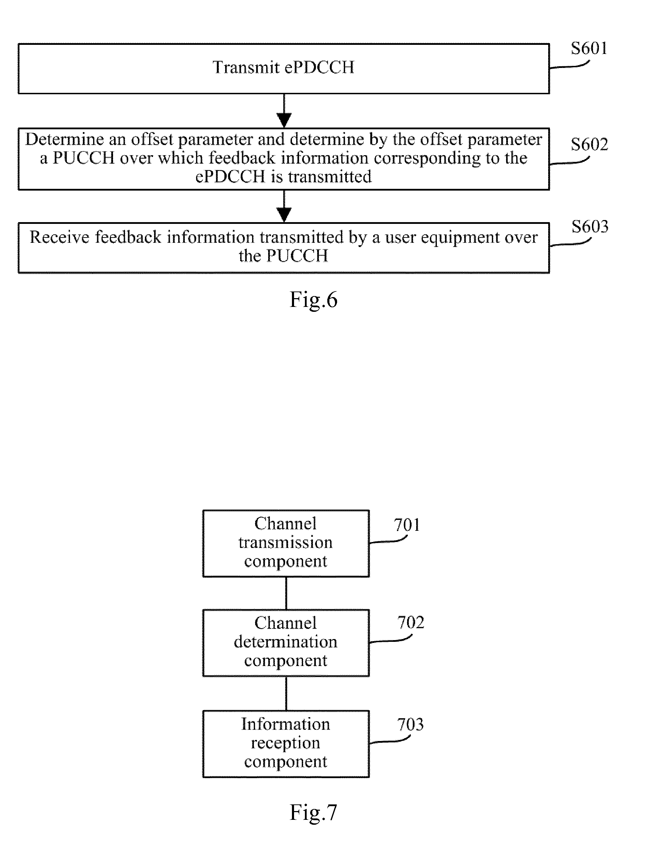

An embodiment of the present invention further correspondingly provides a method for determining an uplink control channel at the base station side, as illustrated in Fig.6, which includes:

Operation S601: transmit an ePDCCH;
Operation S602: determine an offset parameter and determine by the offset parameter a Physical Uplink Control Channel (PUCCH) over which feedback information corresponding to the ePDCCH is transmitted; and
Operation S603: receive feedback information transmitted by a user equipment over the PUCCH.

In the operation S602, the base station determines the offset parameter in the same way that the user equipment determines the offset parameter, particularly as follows:

The offset parameter is determined in one or combination of the following schemes:

The offset parameter is determined according to an antenna port, via which the ePDCCH is transmitted, in a mapping relationship between antenna ports and offset parameters, wherein the mapping relationship between antenna ports and offset parameters is configured by higher-layer signaling or prescribed;
The offset parameter is determined according to a scrambling identity on a reference symbol in which the ePDCCH is transmitted;
The offset parameter is preset and configured to the user equipment in higher-layer signaling;
The offset parameter is preset and configured to the user equipment in configuration information in downlink control signaling;
The offset parameter is determined according to a resource element occupied by the ePDCCH.

The offset parameter is determined according to a resource element occupied by the ePDCCH particularly as follows:

The offset parameter is determined as the serial number of prescribed one of resource elements occupied by the ePDCCH; or
The offset parameter is determined as a parameter mapped to prescribed one of resource elements occupied by the ePDCCH.

The parameter mapped according to the resource element is particularly as follows:

A parameter mapped to a resource element with the lowest serial number in a cluster of ePDCCH resources is 0, and parameters mapped to the other resource elements increase with increasing serial numbers of the resource elements; or
A parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

In the operation S602, the PUCCH over which feedback information corresponding to the ePDCCH is transmitted is determined by the offset parameter particularly by:

> Determining the serial number of the PUCCH over which feedback information corresponding to the ePDCCH is transmitted as the sum of the serial number of preset one of resource elements occupied by the ePDCCH and the offset parameter; or
> Determining the serial number of the PUCCH over which feedback information corresponding to the ePDCCH is transmitted as the sum of a preset serial number of an initial PUCCH resource and the offset parameter.

An embodiment of the present invention further correspondingly provides a device for determining an uplink control channel, which may particularly be a base station, as illustrated in Fig.7, including:

> A channel transmission component 701 is configured to transmit an enhanced Physical Downlink Control Channel (ePDCCH);
> A channel determination component 702 is configured to determine an offset parameter and to determine by the offset parameter a Physical Uplink Control Channel (PUCCH) over which feedback information corresponding to the ePDCCH is transmitted; and
> An information reception component 703 is configured to receive feedback information transmitted by a user equipment over the PUCCH.

The channel determination component 702 configured to determine the offset parameter is particularly configured to:

> Determine the offset parameter in one or combination of the following schemes:
> Determine the offset parameter according to an antenna port, via which the ePDCCH is transmitted, in a mapping relationship between antenna ports and offset parameters, wherein the mapping relationship between antenna ports and offset parameters is configured by higher-layer signaling or prescribed;
> Determine the offset parameter according to a scrambling identity on a reference symbol in which the ePDCCH is transmitted;
> Set and configure the offset parameter to the user equipment in higher-layer signaling;
> Set and configure the offset parameter to the user equipment in configuration information in downlink control signaling;
> Determine the offset parameter according to a resource element occupied by the ePDCCH.

The channel determination component 702 configured to determine the offset parameter according to a resource element occupied by the ePDCCH is particularly configured to:

> Determine the offset parameter as the serial number of prescribed one of resource elements occupied by the ePDCCH; or
> Determine the offset parameter as a parameter mapped to prescribed one of resource elements occupied by the ePDCCH.

The parameter mapped according to the resource element is particularly as follows:

> A parameter mapped to a resource element with the lowest serial number in a cluster of ePDCCH resources is 0, and parameters mapped to the other resource elements increase with increasing serial numbers of the resource elements; or
> A parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

The channel determination component 702 configured to determine by the offset parameter the PUCCH over which feedback information corresponding to the ePDCCH is transmitted is particularly configured to:

> Determine the serial number of the PUCCH over which feedback information corresponding to the ePDCCH is transmitted as the sum of the serial number of preset one of resource elements occupied by the ePDCCH and the offset parameter; or
> Determine the serial number of the PUCCH over which feedback information corresponding to the ePDCCH is transmitted as the sum of a preset serial number of an initial PUCCH resource and the offset parameter.

The embodiments of the present invention provide a method and a device for determining an uplink control channel, wherein an offset parameter is determined from a received ePDCCH or is preset, and a physical PDCCH in which feedback information corresponding to the ePDCCH is transmitted is determined by the offset parameter, thereby determining a PUCCH over which ACK/NACK feedback information corresponding to an enhanced PDCCH is transmitted.

Those skilled in the art shall appreciate that the embodiments of the present invention may be embodied as a method, a system or a computer program product. Therefore the present invention may be embodied in the form of an all-hardware embodiment, an all-software embodiment or an embodiment of software and hardware in combination. Furthermore the present invention may be embodied in the form of a computer program product embodied in one or more computer useable storage mediums (including but not limited to a disk memory, a CD-ROM, an optical memory, etc.) in which computer useable program codes are contained.

The present invention has been described in a flow chart and/or a block diagram of the method, the device (system) and the computer program product according to the embodiments of the present invention. It shall be appreciated that respective flows and/or blocks in the flow chart and/or the block diagram and combinations of the flows and/or the blocks in the flow chart and/or the block diagram may be embodied in computer program instructions. These computer program instructions may be loaded onto a general-purpose computer, a specific-purpose computer, an embedded processor or a processor of another programmable data processing device to produce a machine, so that the instructions executed on the computer or the processor of the other programmable data processing device create apparatuses for performing the functions specified in the flow(s) of the flow chart and/or the block(s) of the block diagram.

These computer program instructions may also be stored into a computer readable memory capable of directing the computer or the other programmable data processing device to operate in a specific manner, so that the instructions stored in the computer readable memory create an article of manufacture including instruction apparatuses which perform the functions specified in the flow(s) of the flow chart and/or the block(s) of the block diagram.

These computer program instructions may also be loaded onto the computer or the other programmable data processing device so that a series of operational operations are performed on the computer or the other programmable data processing device to create a computer implemented process, so that the instructions executed on the computer or the other programmable device provide operations for performing the functions specified in the flow(s) of the flow chart and/or the block(s) of the block diagram.

Although the preferred embodiments of the present invention have been described, those skilled in the art benefiting from the underlying inventive concept may make additional modifications and variations to these embodiments. Therefore the appended claims are intended to be construed as encompassing the preferred embodiments and all the modifications and variations coming into the scope of the present invention.

Evidently those skilled in the art may make various modifications and variations to the present invention without departing from the spirit and scope of the present invention. Thus the present invention is also intended to encompass these modifications and variations thereto so long as the modifications and variations come into the scope of the claims appended to the present invention and their equivalents.

**Claims**

1. A method for determining an uplink control channel, comprising:

   receiving an enhanced Physical Downlink Control Channel (ePDCCH); and
   determining an offset parameter and determining by the offset parameter a Physical Uplink Control Channel (PUCCH) over which feedback information corresponding to the ePDCCH is transmitted.

2. The method according to claim 1, wherein determining the offset parameter comprises:

   determining the offset parameter in one or combination of the following schemes:

      determining the offset parameter according to an antenna port, via which the ePDCCH is transmitted, in a mapping relationship between antenna ports and offset parameters, wherein the mapping relationship between antenna ports and offset parameters is configured by higher-layer signaling or prescribed;
      determining the offset parameter according to a scrambling identity on a reference symbol in which the ePDCCH is transmitted;
      determining the offset parameter from configuration information in received higher-layer signaling;
      determining the offset parameter from configuration information in received downlink control signaling; and
      determining the offset parameter according to a resource element occupied by the ePDCCH.

3. The method according to claim 2, wherein when the offset parameter is determined from configuration information in received higher-layer signaling, the same offset parameter is determined in respective downlink sub-frames.

4. The method according to claim 2, wherein when the offset parameter is determined from configuration information in received downlink control signaling, the offset parameter is used only in the current subframe in which the downlink control signaling is received.

5. The method according to claim 2, wherein determining the offset parameter according to a resource element occupied by the ePDCCH comprises:

   determining the offset parameter as the serial number of prescribed one of resource elements occupied by the ePDCCH; or

determining the offset parameter as a parameter mapped to prescribed one of resource elements occupied by the ePDCCH.

**6.** The method according to claim 5, wherein the parameter mapped according to the resource element comprises:

a parameter mapped to a resource element with the lowest serial number in a cluster of ePDCCH resources is 0, and parameters mapped to the other resource elements increase with increasing serial numbers of the resource elements; or a parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

**7.** The method according to claim 1, wherein determining by the offset parameter the PUCCH over which feedback information corresponding to the ePDCCH is transmitted comprises:

determining the serial number of the PUCCH over which feedback information corresponding to the ePDCCH is transmitted as the sum of the serial number of preset one of resource elements occupied by the ePDCCH and the offset parameter; or determining the serial number of the PUCCH over which feedback information corresponding to the ePDCCH is transmitted as the sum of a preset serial number of an initial PUCCH resource and the offset parameter.

**8.** A device for determining an uplink control channel, comprising:

a reception component configured to receive an enhanced Physical Downlink Control Channel (ePDCCH); and a determination component configured to determine an offset parameter and to determine by the offset parameter a Physical Uplink Control Channel (PUCCH) over which feedback information corresponding to the ePDCCH is transmitted.

**9.** The device according to claim 8, wherein the determination component configured to determine the offset parameter is further configured:

to determine the offset parameter in one or combination of the following schemes:

to determine the offset parameter according to an antenna port, via which the ePDCCH is transmitted, in a mapping relationship between antenna ports and offset parameters, wherein the mapping relationship between antenna ports and offset parameters is configured by higher-layer signaling or prescribed; to determine the offset parameter according to a scrambling identity on a reference symbol in which the ePDCCH is transmitted; to determine the offset parameter from configuration information in received higher-layer signaling; to determine the offset parameter from configuration information in received downlink control signaling; and to determine the offset parameter according to a resource element occupied by the ePDCCH.

**10.** The device according to claim 9, wherein when the determination component determines the offset parameter from configuration information in received higher-layer signaling, the same offset parameter is determined in respective downlink sub-frames.

**11.** The device according to claim 9, wherein when the determination component determines the offset parameter from configuration information in received downlink control signaling, the offset parameter is used only in the current sub-frame in which the downlink control signaling is received.

**12.** The device according to claim 9, wherein the determination component configured to determine the offset parameter according to a resource element occupied by the ePDCCH is further configured:

to determine the offset parameter as the serial number of prescribed one of resource elements occupied by the ePDCCH; or to determine the offset parameter as a parameter mapped to prescribed one of resource elements occupied by the ePDCCH.

**13.** The device according to claim 12, wherein the parameter mapped according to the resource element comprises:

a parameter mapped to a resource element with the lowest serial number in a cluster of ePDCCH resources is 0, and parameters mapped to the other resource elements increase with increasing serial numbers of the resource elements; or

a parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

14. The device according to claim 8, wherein the determination component configured to determine by the offset parameter the PUCCH over which feedback information corresponding to the ePDCCH is transmitted is further configured:

to determine the serial number of the PUCCH over which feedback information corresponding to the ePDCCH is transmitted as the sum of the serial number of preset one of resource elements occupied by the ePDCCH and the offset parameter; or

to determine the serial number of the PUCCH over which feedback information corresponding to the ePDCCH is transmitted as the sum of a preset serial number of an initial PUCCH resource and the offset parameter.

15. A method for determining an uplink control channel, comprising:

transmitting an enhanced Physical Uplink Control Channel (ePUCCH);

determining an offset parameter and determining by the offset parameter a Physical Uplink Control Channel (PUCCH) over which feedback information corresponding to the ePDCCH is transmitted; and

receiving feedback information transmitted by a user equipment over the PUCCH.

16. The method according to claim 15, wherein determining an offset parameter comprises:

determining the offset parameter in one or combination of the following schemes:

determining the offset parameter according to an antenna port, via which the ePDCCH is transmitted, in a mapping relationship between antenna ports and offset parameters, wherein the mapping relationship between antenna ports and offset parameters is configured by higher-layer signaling or prescribed;

determining the offset parameter according to a scrambling identity on a reference symbol in which the ePDCCH is transmitted;

setting and configuring the offset parameter to the user equipment in higher-layer signaling;

setting and configuring the offset parameter to the user equipment in configuration information in downlink control signaling;

determining the offset parameter according to a resource element occupied by the ePDCCH.

17. The method according to claim 16, wherein determining the offset parameter according to a resource element occupied by the ePDCCH comprises:

determining the offset parameter as the serial number of prescribed one of resource elements occupied by the ePDCCH; or

determining the offset parameter as a parameter mapped to prescribed one of resource elements occupied by the ePDCCH.

18. The method according to claim 17, wherein the parameter mapped according to the resource element comprises:

a parameter mapped to a resource element with the lowest serial number in a cluster of ePDCCH resources is 0, and parameters mapped to the other resource elements increase with increasing serial numbers of the resource elements; or

a parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

19. The method according to claim 15, wherein determining by the offset parameter the PUCCH over which feedback information corresponding to the ePDCCH is transmitted comprises:

determining the serial number of the PUCCH over which feedback information corresponding to the ePDCCH is transmitted as the sum of the serial number of preset one of resource elements occupied by the ePDCCH and the offset parameter; and

determining the serial number of the PUCCH over which feedback information corresponding to the ePDCCH is transmitted as the sum of a preset serial number of an initial PUCCH resource and the offset parameter.

20. A device for determining an uplink control channel, comprising:

a channel transmission component configured to transmit an enhanced Physical Downlink Control Channel (ePDCCH); a channel determination component configured to determine an offset parameter and to determine by the offset parameter a Physical Uplink Control Channel (PUCCH) over which feedback information corresponding to the ePDCCH is transmitted; and an information reception component configured to receive feedback information transmitted by a user equipment over the PUCCH.

21. The device according to claim 20, wherein the channel determination component configured to determine the offset parameter is configured:

to determine the offset parameter in one or combination of the following schemes:

to determine the offset parameter according to an antenna port, via which the ePDCCH is transmitted, in a mapping relationship between antenna ports and offset parameters, wherein the mapping relationship between antenna ports and offset parameters is configured by higher-layer signaling or prescribed; to determine the offset parameter according to a scrambling identity on a reference symbol in which the ePDCCH is transmitted; to set and configure the offset parameter to the user equipment in higher-layer signaling; to set and configure the offset parameter to the user equipment in configuration information in downlink control signaling; to determine the offset parameter according to a resource element occupied by the ePDCCH.

22. The device according to claim 21, wherein the channel determination component configured to determine the offset parameter according to a resource element occupied by the ePDCCH is further configured:

to determine the offset parameter as the serial number of prescribed one of resource elements occupied by the ePDCCH; or to determine the offset parameter as a parameter mapped to prescribed one of resource elements occupied by the ePDCCH.

23. The device according to claim 22, wherein the parameter mapped according to the resource element comprises:

a parameter mapped to a resource element with the lowest serial number in a cluster of ePDCCH resources is 0, and parameters mapped to the other resource elements increase with increasing serial numbers of the resource elements; or a parameter mapped to a resource element with the lowest serial number among resource elements, in which an ePDCCH transmission scheme is supported, in a cluster of ePDCCH resources is 0, and parameters mapped to the other resource elements in which the same ePDCCH transmission scheme is supported increase with increasing serial numbers of the resource elements.

24. The device according to claim 20, wherein the channel determination component configured to determine by the offset parameter the PUCCH over which feedback information corresponding to the ePDCCH is transmitted is further configured:

to determine the serial number of the PUCCH over which feedback information corresponding to the ePDCCH is transmitted as the sum of the serial number of preset one of resource elements occupied by the ePDCCH and the offset parameter; or to determine the serial number of the PUCCH over which feedback information corresponding to the ePDCCH is transmitted as the sum of a preset serial number of an initial PUCCH resource and the offset parameter.

Fig.1

Fig.2

| Receive an ePDCCH | S301 |

↓

| Determine an offset parameter and determine by the offset parameter a PUCCH over which feedback information corresponding to the ePDCCH is transmitted | S302 |

Fig.3

|  | ePDCCH transmitted in localized transmission scheme | ePDCCH transmitted in distributed transmission scheme |
|---|---|---|
| PRB pair (cluster of resources) | $n_{ecce}$ | $n_{ecce}+2$ |
|  | $n_{ecce}+1$ | $n_{ecce}+3$ |

Fig.4

| Reception component | 501 |

| Determination component | 502 |

Fig.5

| Transmit ePDCCH | S601 |

↓

| Determine an offset parameter and determine by the offset parameter a PUCCH over which feedback information corresponding to the ePDCCH is transmitted | S602 |

↓

| Receive feedback information transmitted by a user equipment over the PUCCH | S603 |

Fig.6

| Channel transmission component | 701 |

| Channel determination component | 702 |

| Information reception component | 703 |

Fig.7

<table>
<tr><td colspan="2"><strong>INTERNATIONAL SEARCH REPORT</strong></td><td>International application No.<br>PCT/CN2013/072829</td></tr>
</table>

**A.  CLASSIFICATION OF SUBJECT MATTER**

H04L 1/16 (2006.01) i
According to International Patent Classification (IPC) or to both national classification and IPC

**B.  FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, CNKI, VEN: PDCCH, PUCCH, offset

**C.  DOCUMENTS CONSIDERED TO BE RELEVANT**

| Category* | Citation of document, with indication, where appropriate, of the relevant passages | Relevant to claim No. |
|---|---|---|
| X | CN 102215094 A (INST TELECOM SCI&TECHNOLOGY MIN O) 12 October 2011 (12.10.2011) description, paragraphs [0052], [0071], [0139]-[0412] | 1, 2, 4, 8, 9, 11, 15, 16, 20, 21 |
| Y | | 3, 5-7, 10, 12-14, 17-19, 22-24 |
| Y | CN 102355325 A (INST TELECOM SCI&TECHNOLOGY MIN O) 15 February 2012 (15.02.2012) description, paragraphs [0074], [0103], [0104] | 3, 5-7, 10, 12-14, 17-19, 22-24 |
| A | CN 102104962 A (INST TELECOM SCI&TECHNOLOGY MIN O) 22 June 2011 (22.06.2011) the whole document | 1-24 |
| A | WO 2011025111 A1 (LG ELECTRONICS INC.) 03 March 2011 (03.03.2011) the whole document | 1-24 |

☐ Further documents are listed in the continuation of Box C.   ☒ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 08 June 2013 (08.06.2013) | 27 June 2013 (27.06.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>JIANG, Jingjing<br><br>Telephone No. (86-10) 62411430 |

Form PCT/ISA/210 (second sheet) (July 2009)

## INTERNATIONAL SEARCH REPORT
### Information on patent family members

| | | International application No. |
|---|---|---|
| | | PCT/CN2013/072829 |

| Patent Documents referred in the Report | Publication Date | Patent Family | Publication Date |
|---|---|---|---|
| CN 102215094 A | 12.10.2011 | WO 2012163165 A1 | 06.12.2012 |
| CN 102355325 A | 15.02.2012 | WO 2013020518 A1 | 14.02.2013 |
| CN 102104962 A | 22.06.2011 | WO 2012034495 A1 | 22.03.2012 |
| | | KR 2013021395 A | 05.03.2013 |
| WO 2011025111 A1 | 03.03.2011 | EP 2422478 A1 | 29.02.2012 |
| | | KR 20110021621 A | 04.03.2011 |
| | | US 20120106491 A1 | 03.05.2012 |

Form PCT/ISA /210 (patent family annex) (July 2009)

**EP 2 843 867 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2013072829 W
- CN 201210125456